# EUROPÄISCHE PATENTSCHRIFT

(11) **EP 2 871 731 B1**
(45) Veröffentlichungstag und Bekanntmachung des Hinweises auf die Patenterteilung: **28.06.2017**
(21) Anmeldenummer: 14189141.6
(22) Anmeldetag: 16.10.2014
(51) Int. Cl.: H02B 1/56

(54) **Entlüftungsanordnung für eine Schaltanlage**
Venting assembly for a switching system
Dispositif de purge d'air pour une installation de commutation

(30) Priorität: 12.11.2013 DE 102013222967
(43) Veröffentlichungstag der Anmeldung: 13.05.2015
(73) Patentinhaber: Siemens Aktiengesellschaft, 80333 München (DE)
(72) Erfinder: Karadeniz, Tahsin, 34860 Istanbul (TR)

(56) Entgegenhaltungen:
- DE-A1- 2 919 434
- DE-U1- 9 408 362
- DE-U1- 9 416 653
- US-A1- 2003 224 717

## Beschreibung

Die Erfindung betrifft eine Entlüftungsanordnung für eine Schaltanlage.

Entlüftungsanordnungen für Schaltanlagen, insbesondere für luftisolierte Mittelspannungsschaltanlagen sind aus dem landläufigen Stand der Technik bekannt. Aus der DE 94 08 362 ist beispielsweise eine Dachentlüftungsanordnung für Elektronikschränke bekannt, bei der zwei Lüfter über einen Luftkasten und ein Klappensystem mit dem Elektronikschrank zur zwangsweisen Entlüftung verbunden sind. Die DE 2919434 A1 offenbart einen Schrank mit einer Zwangsbelüftung und die US2003224717A1 offenbart ein System um die Zugrichtung auf eine Richtung zu beschränken.

Aufgabe der vorliegenden Erfindung ist es, eine Entlüftungsanordnung für eine Schaltanlage auszubilden, welche über einen einfachen und kostengünstigen Aufbau verfügt.

Erfindungsgemäß gelöst wird dies durch eine Entlüftungsanordnung für eine Schaltanlage gemäß dem unabhängigen Anspruch 1 oder einem der vom unabhängigen Anspruch 1 abhängigen Ansprüche. Eine erfindungsgemäße Entlüftungsanordnung für eine Schaltanlage mit mindestens einem ersten Abluftkanal zur spontanen Entlüftung der Schaltanlage sowie einem weiteren Abluftkanal, in welchem ein Lüfter zur zwangsweisen Entlüftung der Schaltanlage angeordnet ist, wobei eine Verschlussklappenanordnung derart ausgebildet ist, dass bei spontaner Entlüftung der mindestens eine erste Abluftkanal geöffnet ist und bei zwangsweiser Entlüftung der mindestens eine erste Abluftkanal geschlossen ist.

Eine derartige Entlüftungsanordnung für eine Schaltanlage weist einen einfachen und kostengünstigen Aufbau auf, weil durch die Anordnung von mindestens einem ersten Abluftkanal zur spontanen Entlüftung sowie einem weiteren Abluftkanal mit einem Lüfter zur zwangsweisen Entlüftung und einer entsprechenden Verschlussklappenanordnung in einfacher Weise eine Möglichkeit besteht, zwischen spontaner Entlüftung und zwangsweiser Entlüftung je nach äußeren Gegebenheiten, beispielsweise Umgebungstemperatur und dergleichen, auszuwählen. So kann es beispielsweise bei einer niedrigen Umgebungstemperatur ausreichend sein, die Schaltanlage mittels der spontanen Entlüftung über den mindestens einen ersten Abluftkanal zu entlüften, wo hingegen bei beispielsweise steigender Umgebungstemperatur es unter Umständen notwendig sein kann, zu einer zwangsweisen Entlüftung mittels eines Lüftungssystems bzw. eines Lüfters umzuschalten, wobei in diesem Fall durch die Verschlussklappenanordnung und den geschlossenen mindestens einen ersten Abluftkanal gewährleistet ist, dass durch den mindestens einen ersten Abluftkanal keine Umgebungsluft in die Schaltanlage zurückströmen kann. Außerdem ist somit die Möglichkeit gegeben, dass bei Ausfall der zwangsweisen Entlüftung eine spontane Entlüftung wirksam wird.

Der erste Abluftkanal und der weitere Abluftkanal sind nebeneinander angeordnet, wobei die Verschlussklappenanordnung mindestens eine Verschlussklappe aufweist, welche an einer Trennwand zwischen dem mindestens einen ersten Abluftkanal und dem weiteren Abluftkanal an einem Drehlager drehbar angeordnet ist und einen ersten Schenkel, welcher sich vom Drehlager in den ersten Abluftkanal erstreckt, sowie einen zweiten Schenkel, welcher sich vom Drehlager in den weiteren Abluftkanal erstreckt, aufweist, wobei der erste Schenkel und der zweite Schenkel im Wesentlichen L-förmig zueinander angeordnet sind. Eine derartige Anordnung des mindestens einen ersten Abluftkanals neben dem weiteren Abluftkanal mit der im Wesentlichen L-förmig ausgebildeten Verschlussklappe der Verschlussklappenanordnung mit erstem und zweitem Schenkel führt zu einem einfachen und kostengünstigen Aufbau, weil durch den ersten Schenkel der mindestens eine erste Abluftkanal bei zwangsweiser Entlüftung verschließbar ist. Im Wesentlichen L-förmig im Sinne der vorliegenden Erfindung bedeutet dabei, dass zwischen dem ersten Schenkel und dem zweiten Schenkel der Verschlussklappe ein Winkel vorgesehen ist, welcher vorzugsweise <180°, aber >60° ist.

In einer besonders bevorzugten Ausführungsform liegt der Winkel zwischen dem ersten Schenkel und dem zweiten Schenkel der Verschlussklappe zwischen 100° und 140°.

In einer besonders bevorzugten Ausführungsform beträgt der Winkel zwischen dem ersten Schenkel und dem zweiten Schenkel der Verschlussklappe 120°. Durch eine derartige Wahl des Winkels zwischen dem ersten Schenkel und dem zweiten Schenkel ist es besonders einfach möglich, entweder den mindestens einen ersten Abluftkanal oder den einen weiteren Abluftkanal zu verschließen, wobei der jeweils andere Kanal geöffnet bleibt.

In weiterer vorteilhafter Ausgestaltung der Erfindung weisen der erste Schenkel und der zweite Schenkel der Verschlussklappe ein Gewichtsverhältnis zueinander derart auf, dass bei spontaner Entlüftung durch die geringeren Gewichtskräfte des leichteren ersten Schenkels zu schwererem zweitem Schenkel der mindestens eine erste Abluftkanal geöffnet ist. Der erste und der zweite Schenkel können dabei unterschiedlich lang sein, beispielsweise je nach Größe einer zu verschließenden Öffnung von mindestens einem ersten Abluftkanal und weiterem Abluftkanal. Durch ihr Gewichtsverhältnis zueinander muss gewährleistet sein, dass sich durch die Gewichtskräfte zumindest eine spontane Entlüftung über den mindestens einen ersten Abluftkanal ausbildet, indem der erste Schenkel eine Eintrittsöffnung aus der Schaltanlage in den mindestens einen ersten Abluftkanal freigibt. Dabei kann der zweite Schenkel schwerer sein als der erste Schenkel, so dass gewährleistet ist, dass sich die Verschlussklappe um ihr Drehlager derartig dreht, dass eine Eintrittsöffnung aus der Schaltanlage zum mindestens einen ersten Abluftkanal geöffnet ist. Leichter im Sinne der vorliegenden Erfindung bedeutet dabei, dass insbesondere die Strömungskräfte bei zwangsweiser Entlüftung bei angeschaltetem Lüfter ausreichen, um die Verschlussklappe um ihr Lager zu drehen und mittels des ersten Schenkels den mindestens einen ersten Abluftkanal zu verschließen.

Die Erfindung wird im Folgenden anhand der Zeichnung und eines Ausführungsbeispiels mit Bezug auf die beiliegenden Figuren näher erläutert. Es zeigen:
- Figur 1:: eine teilweise schematische Ansicht einer erfindungsgemäßen Entlüftungsanordnung für eine Schaltanlage in einem ersten Zustand; und
- Figur 2:: eine teilweise schematische Ansicht einer erfindungsgemäßen Entlüftungsanordnung für eine Schaltanlage in einem zweiten Zustand.

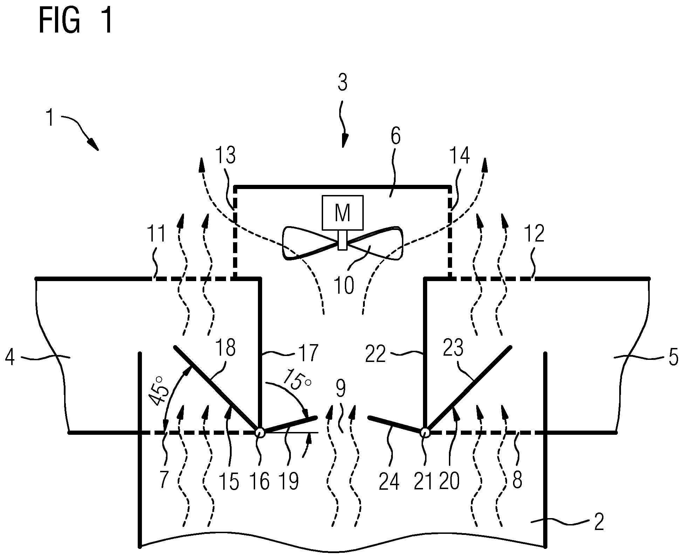

Die Figur 1 zeigt eine schematische teilweise Ansicht einer Schaltanlage 1, beispielsweise in Form einer luftisolierten Mittelspannungsschaltanlage, welche ein Schaltfeld 2 mit figürlich nicht weiter ausgeführten Funktionsräumen, beispielsweise zur Aufnahme eines Leistungsschalters, zur Aufnahme von Sammelschienen oder Kabelabgängen sowie Stromwandlern, Messgeräten etc. aufweist. Das Schaltfeld 2 ist mit einer Entlüftungsanordnung 3 verbunden, welche Entlüftungsanordnung 3 im Ausführungsbeispiel einen ersten Abluftkanal 4 sowie einen zweiten Abluftkanal 5 und einen weiteren Abluftkanal 6 umfasst. Der erste Abluftkanal 4 ist dabei über eine erste Öffnung 7 mit dem Schaltfeld 2 verbunden, der zweite Abluftkanal 5 ist über eine zweite Öffnung 8 mit dem Schaltfeld 2 verbunden, der weitere Abluftkanal 6 ist über eine weitere Öffnung 9 mit dem Schaltfeld 2 verbunden. Im weiteren Abluftkanal 6 ist ein Lüfter 10 angeordnet. Der erste Abluftkanal 4 weist eine erste Abluftöffnung 11 auf, der zweite Abluftkanal 5 weist eine zweite Abluftöffnung 12 auf, der weitere Abluftkanal 6 weist weitere Abluftöffnungen 13 und 14 auf. Eine erste Verschlussklappe 15 ist an einem ersten Drehlager 16 an einer ersten Trennwand 17, welche den ersten Abluftkanal 4 vom weiteren Abluftkanal 6 trennt, angeordnet und weist einen ersten Schenkel 18 sowie einen zweiten Schenkel 19 auf, welche im Ausführungsbeispiel einen Winkel von 120° einschließen. Der erste Schenkel 18 ist zum Verschließen der ersten Öffnung 7 vorgesehen, wenn der Lüfter 10 läuft. Der zweite Schenkel 19 ist zum Drehen der Verschlussklappe 15 durch die Strömungskräfte des Lüfters 10 vorgesehen. Eine zweite Verschlussklappe 20 ist an einem zweiten Drehlager 21 an einer zweiten Trennwand 22, welche zwischen dem weiteren Abluftkanal 6 und dem zweiten Abluftkanal 5 angeordnet ist, befestigt und umfasst ebenfalls einen ersten Schenkel 23 sowie einen zweiten Schenkel 24, wobei der erste Schenkel 23 zum Verschließen der zweiten Öffnung 8 vorgesehen ist. Die erste Öffnung 7 sowie die zweite Öffnung 8, welche das Schaltfeld 2 mit dem ersten Abluftkanal 4 bzw. dem zweiten Abluftkanal 5 verbinden, sind dabei zur spontanen Entlüftung der Schaltanlage 1 vorgesehen durch Strömungsvorgänge, welche durch die erwärmte Luft, welche innerhalb der Schaltanlage 1 aufsteigt, ausgebildet werden. Dazu weisen bei der ersten Verschlussklappe 15 und der zweiten Verschlussklappe 20 der erste Schenkel 18 und der zweite Schenkel 19 bzw. der erste Schenkel 23 und der zweite Schenkel 24 Gewichtsverhältnisse zueinander auf, dass anhand der Gewichtskräfte von erstem Schenkel 18 bzw. 23 zu zweitem Schenkel 19 bzw. 24 bei spontaner Entlüftung die erste Öffnung 7 bzw. die zweite Öffnung 8 geöffnet sind, wie in der Figur 1 dargestellt. Die weitere Öffnung 9, welche den weiteren Abluftkanal 6 mit dem Schaltfeld 2 verbindet, muss bei spontaner Entlüftung dabei nicht vollständig geschlossen sein, sondern kann ebenfalls zur spontanen Entlüftung über den weiteren Abluftkanal 6 beitragen, wie in der Figur 1 dargestellt.

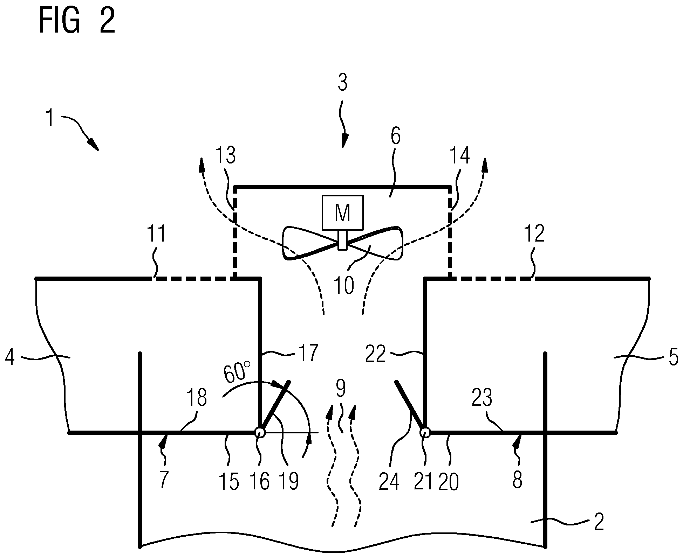

Stellt sich nun an die Schaltanlage 1 die Anforderung, beispielsweise durch gestiegene Umgebungstemperaturen oder dergleichen, größere Mengen an wärmerer Abluft abzuführen, so wird dies über den Lüfter 10 im weiteren Abluftkanal 6 ermöglicht, in dem dieser durch eine entsprechende Steuerung angesteuert und angeschalten wird. In einem solchen Fall muss dann gewährleistet sein, dass über die erste Abluftöffnung 11 und die erste Öffnung 7 bzw. die zweite Abluftöffnung 12 und die zweite Öffnung 8 keine Umgebungsluft zurück ins Schaltfeld 2 geführt wird. Dazu müssen die erste Öffnung 7 bzw. die zweite Öffnung 8 bei zwangsweiser Entlüftung über den weiteren Abluftkanal 6 und den darin angeordneten Lüfter 10 verschlossen sein. Dies wird über die am ersten Drehlager 16 drehbar angeordnete erste Verschlussklappe 15 sowie über die am zweiten Drehlager 21 drehbar angeordnete zweite Verschlussklappe 20 derart gewährleistet, dass aufgrund der Gewichtskräfte von erstem Schenkel 18 bzw. erstem Schenkel 23 im Verhältnis zu zweitem Schenkel 19 bzw. zu zweitem Schenkel 24 in Zusammenhang mit den durch den Lüfter 10 erzeugten Strömungskräften im weiteren Abluftkanal 6 sich die erste Verschlussklappe 15 im Gegenuhrzeigersinn dreht, bis die erste Öffnung 7 verschlossen ist, und die zweite Verschlussklappe 20 sich im Uhrzeigersinn dreht, bis die zweite Öffnung 8 verschlossen ist, wie in der Figur 2 dargestellt, in welcher die erste Öffnung 7 und die zweite Öffnung 8 durch den ersten Schenkel 18 der ersten Verschlussklappe 15 bzw. den ersten Schenkel 23 der zweiten Verschlussklappe 20 verschlossen sind, so dass gewährleistet ist, dass lediglich eine zwangsweise Entlüftung über den weiteren Abluftkanal 6 mit dem darin angeordneten Lüfter 10 stattfindet und insbesondere keine Umgebungsluft über die erste Öffnung 7 bzw. die zweite Öffnung 8 in das Schaltfeld 2 gelangen kann.

Das Ausführungsbeispiel der Figuren 1 und 2 ist dabei mit einem ersten Abluftkanal 4 und einem zweiten Abluftkanal 5, welche jeweils neben dem weiteren Abluftkanal 6 angeordnet sind, beschrieben, es ist aber offensichtlich, dass gegebenenfalls auch ein einziger erster Abluftkanal 4, welcher neben dem weiteren Abluftkanal 6 angeordnet ist, mit einer entsprechenden Verschlussklappenanordnung ausreicht.

### Bezugszeichenliste

- 1: Schaltanlage
- 2: Schaltfeld
- 3: Entlüftungsanordnung
- 4: erster Abluftkanal
- 5: zweiter Abluftkanal
- 6: weiterer Abluftkanal
- 7: erste Öffnung
- 8: zweite Öffnung
- 9: weitere Öffnung
- 10: Lüfter
- 11: erste Abluftöffnung
- 12: zweite Abluftöffnung
- 13, 14: weitere Abluftöffnungen
- 15: erste Verschlussklappe
- 16: erstes Drehlager
- 17: erste Trennwand
- 18: erster Schenkel
- 19: zweiter Schenkel
- 20: zweite Verschlussklappe
- 21: zweites Drehlager
- 22: zweite Trennwand
- 23: erster Schenkel
- 24: zweiter Schenkel

## Patentansprüche

1. Entlüftungsanordnung (3) für eine Schaltanlage (1) mit mindestens einem ersten Abluftkanal (4, 5) zur spontanen Entlüftung der Schaltanlage (1) sowie einem weiteren Abluftkanal (6), in welchem ein Lüfter (10) zur zwangsweisen Entlüftung der Schaltanlage (1) angeordnet ist, wobei eine Verschlussklappenanordnung derart ausgebildet ist, dass bei spontaner Entlüftung der mindestens eine erste Abluftkanal (4, 5) geöffnet ist und bei zwangsweiser Entlüftung der mindestens eine erste Abluftkanal (4, 5) geschlossen ist,
**dadurch gekennzeichnet, dass**
der mindestens eine erste Abluftkanal (4, 5) und der weitere Abluftkanal (6) nebeneinander angeordnet sind, wobei die Verschlussklappenanordnung mindestens eine Verschlussklappe (15, 20) aufweist, welche an einer Trennwand (17, 22) zwischen dem mindestens einen ersten Abluftkanal (4, 5) und dem weiteren Abluftkanal (6) an einem Drehlager (16, 21) drehbar angeordnet ist und einen ersten Schenkel (18, 23), welcher sich vom Drehlager (16, 21) in den ersten Abluftkanal (4, 5) erstreckt, sowie einen zweiten Schenkel (19, 24), welcher sich vom Drehlager (16, 21) in den weiteren Abluftkanal (6) erstreckt, aufweist, wobei der erste Schenkel (18, 23) und der zweite Schenkel (19, 24) im Wesentlichen L-förmig zueinander angeordnet sind.

2. Entlüftungsanordnung (3) nach Anspruch 1,
**dadurch gekennzeichnet, dass**
der Winkel zwischen dem ersten Schenkel (18, 23) und dem zweiten Schenkel (19, 24) der Verschlussklappe (15, 20) zwischen 100° und 140° liegt.

3. Entlüftungsanordnung (3) nach Anspruch 1,
**dadurch gekennzeichnet, dass**
der Winkel zwischen dem ersten Schenkel (18, 23) und dem zweiten Schenkel (19, 24) der Verschlussklappe (15, 20) 120° beträgt.

4. Entlüftungsanordnung (3) nach einem der Ansprüche 1 bis 3,
**dadurch gekennzeichnet, dass**
der der erste Schenkel (18, 23) und der zweite Schenkel (19, 24) der Verschlussklappe (15, 20) ein Gewichtsverhältnis zueinander derart auf, dass bei spontaner Entlüftung durch die geringeren Gewichtskräfte des leichteren ersten Schenkels (18, 23) zu schwererem zweitem Schenkel (19, 24) der mindestens eine erste Abluftkanal (4, 5) geöffnet ist.

## Claims

1. Ventilation arrangement (3) for a switchgear (1) with at least one first exhaust duct (4, 5) for spontaneous ventilation of the switchgear (1) and a further exhaust duct (6) in which a fan (10) for the forced ventilation of the switchgear (1) is arranged, wherein a closure flap arrangement is designed such that during spontaneous ventilation the at least one first exhaust duct (4, 5) is opened and during forced ventilation the at least one first exhaust duct (4, 5) is closed,
**characterised in that**
the at least one first exhaust duct (4, 5) and the further exhaust duct (6) are arranged next to one another, wherein the closure flap arrangement has at least one closure flap (15, 20) which is rotatably arranged at a partition (17, 22) between the at least one first exhaust duct (4, 5) and the further exhaust duct(6) on a pivot bearing (16, 21) and has a first leg (18, 23) which extends from the pivot bearing (16, 21) into the first exhaust duct (4, 5), and a second leg (19, 24) which extends from the pivot bearing (16, 21) into the further exhaust duct (6), wherein the first leg (18, 23) and the second leg (19, 24) are arranged essentially in an L-shape to one another.

2. Ventilation arrangement (3) according to claim 1,
**characterised in that**
the angle between the first leg (18, 23) and the second leg (19, 24) of the closure flap (15, 20) is between 100° and 140°.

3. Ventilation arrangement (3) according to claim 1,
**characterised in that**
the angle between the first leg (18, 23) and the second leg (19, 24) of the closure flap (15, 20) is 120°.

4. Ventilation arrangement (3) according to one of claims 1 to 3,
**characterised in that**
the first leg (18, 23) and the second leg (19, 24) of the closure flap (15, 20) have a weight ratio in respect of one another such that during spontaneous ventilation the at least one first exhaust duct (4, 5) is opened thanks to the lower weight forces of the lighter first leg (18, 23) compared to the heavier second leg (19, 24).

## Revendications

1. Dispositif (3) de purge d'air pour une installation (1) de commutation, comprenant au moins un premier conduit (4, 5) pour de l'air d'échappement, afin de purger spontanément l'installation (1) de commutation, ainsi qu'un autre conduit (6) pour de l'air d'échappement, dans lequel un ventilateur (10) est monté pour la purge d'air forcée de l'installation (1) de commutation, un dispositif à clapet de fermeture étant constitué de manière à, lors de la purge d'air spontanée, ouvrir le au moins un premier conduit (4, 5) d'air d'échappement et, lors d'une purge d'air forcée, fermer le au moins un premier conduit (4, 5) d'air d'échappement,
**caractérisé en ce que**
le au moins un premier conduit (4, 5) d'air d'échappement et l'autre conduit (6) d'air d'échappement sont disposés l'un à côté de l'autre, le dispositif à volet de fermeture ayant au moins un volet (15, 20) de fermeture, qui est monté tournant sur un coussinet (16, 21) de pivotement, sur une cloison (17, 22) entre le au moins un premier conduit (4, 5) pour de l'air d'échappement et l'autre conduit (6) pour de l'air d'échappement et a une première branche (18, 23), qui s'étend à partir du coussinet (16, 21) de pivotement dans le premier conduit (4, 5) pour de l'air d'échappement, ainsi qu'une deuxième branche (19, 24), qui s'étend à partir du coussinet (16, 21) de pivotement dans l'autre conduit (6) pour de l'air d'échappement, la première branche (18, 23) et la deuxième branche (19, 24) étant disposées l'une par rapport à l'autre sensiblement en forme de L.

2. Dispositif (3) de purge d'air suivant la revendication 1,
**caractérisé en ce que**
l'angle entre la première branche (18, 23) et la deuxième branche (19, 24) du volet (15, 20) de fermeture est compris entre 100° et 140°.

3. Dispositif (3) de purge d'air suivant la revendication 1,
**caractérisé en ce que**
l'angle entre la première branche (18, 23) et la deuxième branche (19, 24) du volet (15, 20) de fermeture est de 120°.

4. Dispositif (3) de purge d'air suivant l'une des revendications 1 à 3,
**caractérisé en ce que**
la première branche (18, 23) et la deuxième branche (19, 24) du volet (15, 20) de fermeture ont un rapport de poids entre elles tel que, lors de la purge d'air spontanée, le au moins un premier conduit (4, 5) pour de l'air d'échappement est ouvert par la force pondérale plus petite de la première branche (18, 23) plus légère que la deuxième branche (19, 24) plus lourde.
